# FASCICULE DE BREVET EUROPEEN

(11) **EP 0 761 495 B1**
(45) Date de publication et mention de la délivrance du brevet: **29.09.1999**
(21) Numéro de dépôt: 96401688.5
(22) Date de dépôt: 26.07.1996
(51) Int. Cl.: B60N 2/42

(54) **Siège pour véhicule automobile**
Kraftfahrzeugsitz
Seat for motor vehicles

(30) Priorité: 11.09.1995 FR 9510628
(43) Date de publication de la demande: 12.03.1997
(73) Titulaire: CESA COMPAGNIE EUROPEENNE DE SIEGES POUR AUTOMOBILES, 92307 Levallois-Perret Cédex (FR)
(72) Inventeur: Bedu, Jackie Marcel, 45290 Nogent-sur-Vernisson (FR)
(74) Mandataire: Moncheny, Michel

(56) Documents cités:
- EP-A- 0 463 436
- DE-A- 4 211 964
- DE-A- 4 407 129
- FR-A- 2 044 083
- FR-A- 2 101 292
- GB-A- 1 391 644
- US-A- 3 578 376
- US-A- 5 133 587

## Description

La présente invention concerne un siège perfectionné pour véhicule automobile.

On connaît déjà dans l'état de la technique un siège pour véhicule automobile, du type comprenant une assise comportant une armature de support de matelassure munie de deux flasques longitudinaux en tôle, sensiblement parallèles aux bords latéraux de l'assise, formant piétement, et d'une traverse de rigidification fixée entre les flasques, à l'avant de ces derniers.

La traverse rigidifie l'assise du siège de manière à protéger un occupant assis dans le siège en cas de choc transversal.

Par ailleurs, en cas de choc frontal, la traverse participe à la retenue de l'occupant dans le siège en bloquant le déplacement vers l'avant du bassin de cet occupant.

Cependant, du fait de sa grande rigidité, la traverse est susceptible d'exercer des efforts importants néfastes sur les parties de l'occupant qu'elle retient lors du choc frontal.

L'invention a pour but de remédier à cet inconvénient en évitant, lors d'un choc frontal, les effets néfastes sur l'occupant de la traverse de rigidification.

A cet effet l'invention a pour objet un siège pour véhicule du type précité, caractérisé en ce que la traverse est fixée par ses extrémités dans des orifices de fixation ménagés dans les flasques, le contour de chaque orifice étant délimité par l'extrémité arrière d'une portion du flasque correspondant formant une languette déformable sensiblement longitudinale, prédécoupée dans une partie avant du flasque s'étendant depuis l'orifice de fixation vers le bord avant du flasque, de manière qu'en cas de choc conduisant un occupant du siège à exercer un effort sur la traverse vers l'avant de l'assise, les extrémités de la traverse détachent les languettes en les déformant et se déplacent dans des découpes des flasques complémentaires des languettes détachées.

Suivant d'autres caractéristiques de l'invention:
- chaque extrémité de la traverse est soudée sur l'extrémité arrière de la languette predécoupée ;
- chaque languette prédécoupée est délimitée par deux fentes sensiblement longitudinales, les extrémités arrière de ces fentes étant séparées de l'orifice de fixation correspondant par des zones frangibles sous l'effet d'un choc ;
- les fentes convergent vers l'avant de l'assise;
- la traverse est tubulaire ;
- la traverse a une section circulaire ;
- l'écartement des fentes est au moins par endroits inférieur au diamètre de la traverse ;
- les parties avant des flasques sont pliées de manière à converger vers l'avant de l'assise.

L'invention sera mieux comprise à la lecture de la description qui va suivre donnée uniquement à titre d'exemple et faite en se référant aux dessins annexés dans lesquels :
- la figure 1 est une vue de côté de l'assise d'un siège selon l'invention ;
- la figure 2 est une vue de dessus de l'assise représentée à la figure 1.

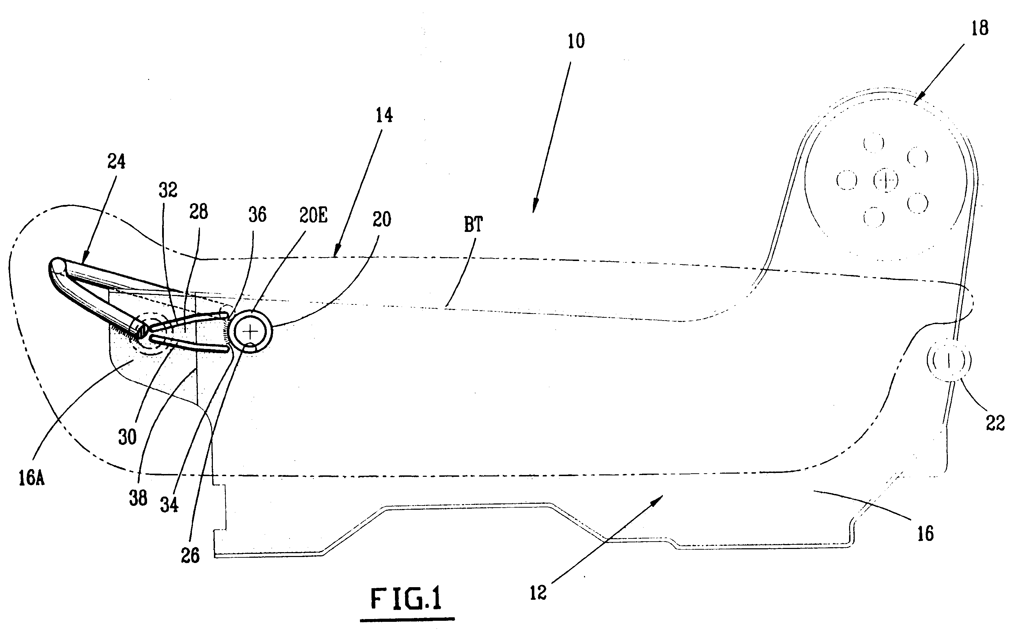

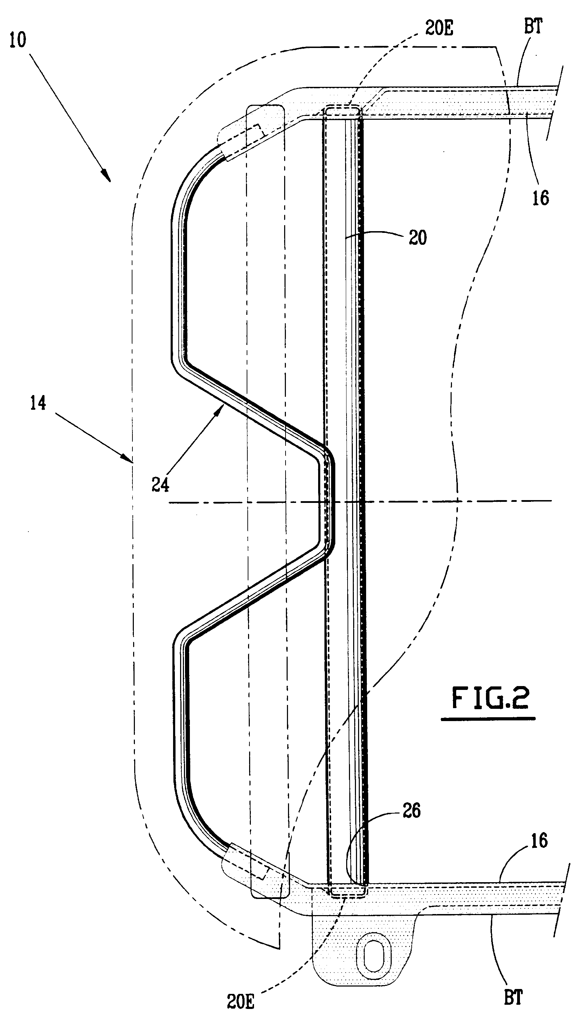

On a représenté sur les figures 1 et 2 une assise 10 d'un siège selon l'invention comportant une armature 12 portant une matelassure 14 représentée en trait mixte sur les figures 1 et 2.

L'armature comporte deux flasques longitudinaux 16 en tôle, sensiblement parallèles aux bords latéraux de l'assise 10, formant piétement.

Les extrémités arrière des flasques 16 comportent des moyens connus 18 d'articulation d'un dossier du siège non représenté sur les figures.

De façon classique, le contour des flasques 16 comporte un bord tombé BT de rigidification.

L'armature 12 comporte également deux traverses de rigidification fixées entre les flasques 16, l'une 20 à l'avant et l'autre 22 à l'arrière de ces derniers.

De préférence, les traverses de rigidification 20,22 ont une section circulaire et sont tubulaires.

L'armature 12 comporte en outre une tige pliée 24 de soutien du pli poplité des jambes d'un occupant du siège, ayant une forme générale en W. Les extrémités de cette tige 24 sont soudées sur des parties avant 16A des flasques 16 pliées de manière à converger vers l'avant de l'assise.

Le milieu de la tige 24 est éventuellement soudé sur la traverse avant 20.

La traverse avant 20 est fixée par ses extrémités 20E dans des orifices de fixation 26 ménagés dans les flasques 16. Les extrémités 20E de la traverse font saillie, à travers les orifices 26, sur les faces opposées des flasques 16.

Le contour de chaque orifice de fixation 26 est délimité par l'extrémité arrière d'une portion du flasque 16 correspondant formant une languette déformable 28 sensiblement longitudinale, prédécoupée dans la partie avant 16A du flasque qui s'étendent entre l'orifice 26 et le bord avant du flasque.

De préférence, chaque languette prédécoupée 28 est délimitée par deux fentes 30,32 sensiblement longitudinales, convergeant vers l'avant de l'assise. Les extrémités arrière des fentes sont séparées de l'orifice de fixation 26 correspondant par des zones 34,36 frangibles en cas de choc, comme cela sera expliqué plus en détail ultérieurement.

Chaque extrémité 20E de la traverse avant 20 est soudée sur l'extrémité arrière de la languette 28 prédécoupée.

L'écartement entre les fentes 33,32 décroît vers l'avant de l'assise, depuis une valeur sensiblement égale au diamètre de la traverse avant 20 jusqu'à une valeur inférieure au diamètre de cette traverse.

Dans l'exemple illustré, les fentes 30,32 sont sensiblement rectilignes et s'étendent de part et d'autre d'une ligne de pliage 38 séparant la partie avant 16A du flasque 16 du reste de ce flasque.

En variante, les fentes 30,32 peuvent être courbes ou bien comporter des tronçons parallèles entre eux.

Lors d'un choc frontal conduisant un occupant du siège à exercer un effort sur la traverse avant 20, vers l'avant de l'assise, les extrémités 20E de la traverse 20 détachent les languettes 28 en faisant céder les zones frangibles 34,36 et se déplacent en déformant les languettes 28 dans les découpes des flasques 16 complémentaires de ces languettes.

Les bords des découpes, délimités par les fentes convergentes 30,32, font effet de coins et opposent, tout en se déformant, une résistance croissante au déplacement vers l'avant de la traverse avant 20. Une grande quantité de l'énergie reçue par la traverse 20 est ainsi absorbée.

Sur les figures 1 et 2 on a représenté en trait plein la traverse avant 20 en position normale, et en trait mixte cette traverse 20 après déplacement, à la suite d'un choc frontal.

Les parties avant 16A convergentes vers l'avant de l'assise permettent d'éviter, lors d'un choc, que les extrémités 20E de la traverse 20 s'échappent des découpes complémentaires des languettes 28 sous l'effet d'une composante parallèle à la traverse 20 des efforts exercés sur cette traverse.

L'invention ne se limite pas au mode de réalisation illustré sur les figures.

En particulier, les fentes 30,32 de prédécoupage peuvent être remplacées par tout type de ligne de prédécoupage, par exemple par des lignes prédécoupées discontinues.

La traverse avant 20 n'est pas nécessairement tubulaire. Elle peut être pleine et avoir une section non circulaire.

La traverse avant peut également être réalisée en tôle emboutie.

L'invention comporte de nombreux avantages.

En cas de choc frontal, la traverse avant 20, se déplace vers l'avant de l'assise en déformant les languettes prédécoupées 28 ainsi que les bords des découpes complémentaires de ces languettes de manière à absorber une grande quantité d'énergie du choc, ce qui réduit d'autant les efforts auxquels est soumis l'occupant qui est retenu par la traverse avant.

La forme, la dimension et l'orientation des lignes de prédécoupage des languettes déformables sont choisies en fonction du déplacement longitudinal de la traverse avant que l'on souhaite obtenir en cas de choc pour réduire au minimum les efforts transmis à l'occupant du siège.

Ainsi, l'invention permet d'éviter les effets néfastes, en cas de choc frontal, des traverses classiques rigides. Toutefois, l'armature de l'assise du siège selon l'invention est tout aussi rigide transversalement qu'une armature d'assise de siège classique.

L'invention est très simple et n'introduit aucun organe supplémentaire par rapport à un siège classique.

## Revendications

1. Siège pour véhicule automobile, du type comprenant une assise (10) comportant une armature (12) de support de matelassure (14) munie de deux flasques longitudinaux (16) en tôle, sensiblement parallèles aux bords latéraux de l'assise, formant piétement, et d'une traverse (20) de rigidification fixée entre les flasques (16), à l'avant de ces derniers, caractérisé en ce que la traverse (20) est fixée par ses extrémités (20E) dans des orifices de fixation (26) ménagés dans les flasques (16), le contour de chaque orifice (26) étant délimité par l'extrémité arrière d'une portion du flasque (16) correspondant formant une languette déformable (28) sensiblement longitudinale, prédécoupée dans une partie avant (16A) du flasque s'étendant depuis l'orifice de fixation (26) vers le bord avant du flasque, de manière qu'en cas de choc conduisant un occupant du siège à exercer un effort sur la traverse (20) vers l'avant de l'assise, les extrémités (20E) de la traverse détachent les languettes (28) en les déformant et se déplacent dans des découpes des flasques (16) complémentaires des languettes (28) détachées.

2. Siège selon la revendication 1, caractérisé en ce que chaque extrémité (20E) de la traverse (20) est soudée sur l'extrémité arrière de la languette (28) prédécoupée.

3. Siège selon la revendication 1 ou 2, caractérisé en ce que chaque languette (28) prédécoupée est délimitée par deux fentes (30,32) sensiblement longitudinales, les extrémités arrière de ces fentes étant séparées de l'orifice de fixation (26) correspondant par des zones (34,36) frangibles sous l'effet d'un choc.

4. Siège selon la revendication 3, caractérisé en ce que les fentes (30,32) convergent vers l'avant de l'assise.

5. Siège selon l'une quelconque des revendications précédentes, caractérisé en ce que la traverse (20) est tubulaire.

6. Siège selon l'une quelconque des revendications précédentes, caractérisé en ce que la traverse (20) a une section circulaire.

7. Siège selon la revendication 6 et l'une quelconque des revendications 3 à 5, caractérisé en ce que l'écartement des fentes (30,32) est au moins par endroits inférieur au diamètre de la traverse (20).

8. Siège selon l'une quelconque des revendications précédentes, caractérisé en ce que les parties avant (16A) des flasques (16) sont pliées de manière à converger vers l'avant de l'assise.

## Claims

1. Seat for a motor vehicle, of the type comprising a squab (10) comprising a reinforcement (12) for supporting the cushion (14), provided with two longitudinal sheet metal cheeks (16), substantially parallel to the side edges of the squab, forming a reinforcement, and with a strengthening cross-bar (20) fixed between the cheeks (16), at the front of the latter, characterised in that the cross-bar (20) is fixed by its ends (20E) in fixing orifices (26) provided in the cheeks (16), the contour of each orifice (26) being defined by the rear end of a portion of corresponding cheek (16) forming a substantially longitudinal deformable tongue (28), pre-cut in a front part (16A) of the cheek extending from the fixing orifice (26) towards the front edge of the cheek, in order that in the case of an impact causing an occupant of the seat to exert a force on the cross-bar (20) towards the front of the seat, the ends (20E) of the cross-bar detach the tongues (28) by deforming them and move in cut-outs of the complementary cheeks (16) of the detached tongues (28).

2. Seat according to Claim 1, characterized in that each end (20E) of the cross-bar (20) is welded to the rear end of the pre-cut tongue (28).

3. Seat according to Claim 1 or 2, characterized in that each pre-cut tongue (28) is defined by two substantially longitudinal slots (30, 32), the rear ends of these slots being separated from the corresponding fixing orifice (26) by areas (34, 36) which break under the effect of an impact.

4. Seat according to Claim 3, characterized in that the slots (30, 32) converge towards the front of the squab.

5. Seat according to one of the preceding Claims, characterized in that the cross-bar (20) is tubular.

6. Seat according to one of the preceding Claims, characterized in that the cross-bar (20) has a circular cross-section.

7. Seat according to Claim 6 and one of Claims 3 to 5, characterized in that the spacing of the slots (30, 32) is at least in places less than the diameter of the cross-bar (20).

8. Seat according to one of the preceding Claims, characterized in that the front parts (16A) of the cheeks (16) are bent in order to converge towards the front of the squab.

## Patentansprüche

1. Kraftfahrzeugsitz, bestehend aus einer Sitzfläche (10), die eine Stützarmierung (12) für eine Polsterung (14) umfaßt, die mit zwei Längsflanschen (16) aus Blech versehen ist, die im wesentlichen zu den Seitenrändern der Sitzfläche parallel sind, die ein Gestell bilden, und aus einer Querstrebe (20) zur Versteifung, die zwischen den Flanschen (16) vor diesen letztgenannten angeordnet ist, dadurch gekennzeichnet, daß die Querstrebe (20) mit ihren Enden (20E) in Befestigungsöffnungen (26) befestigt ist, die in den Flanschen (16) vorgesehen sind, wobei der Umfang jeder Öffnung (26) von dem hinteren Ende eines Abschnittes des entsprechenden Flansches (16) begrenzt wird, der eine im wesentlichen längs verformbare Zunge (28) bildet, die in einem vorderen Teil (16A) des Flansches vorgefertigt ist, der sich von der Befestigungsöffnung (26) zu dem vorderen Rand des Flansches erstreckt, so daß im Falle eines Aufpralls, der den Fahrgast des Sitzes dazu bringt, auf die Querstrebe (20) eine Kraft zum vorderen Bereich der Sitzfläche hin auszuüben, die Enden (20E) der Querstrebe die Zungen (28) loslösen, indem sie sie verformen, und sich in Ausschnitte der zu den losgelösten Zungen (28) komplementären Flansche (16) verschieben.

2. Sitz nach Anspruch 1, dadurch gekennzeichnet, daß jedes Ende (20E) der Querstrebe (20) auf das hintere Ende der vorgefertigten Zunge (28) geschweißt ist.

3. Sitz nach Anspruch 1 oder 2, dadurch gekennzeichnet, daß jede vorgefertigte Zunge (28) von zwei im wesentlichen längs ausgerichteten Spalten (30, 32) begrenzt wird, wobei die hinteren Enden dieser Spalte von der entsprechenden Befestigungsöffnung (26) durch unter der Wirkung eines Aufpralls einnehmbare Bereiche (34, 36) getrennt ist.

4. Sitz nach Anspruch 3, dadurch gekennzeichnet, daß die Spalte (30, 32) zum vorderen Bereich der Sitzfläche hin zusammenlaufen.

5. Sitz nach einem der vorhergehenden Ansprüche, dadurch gekennzeichnet, daß die Querstrebe (20) rohrförmig ist.

6. Sitz nach einem der vorhergehenden Ansprüche, dadurch gekennzeichnet, daß die Querstrebe (20) einen kreisförmigen Querschnitt aufweist.

7. Sitz nach Anspruch 6 und einem der Ansprüche 3 bis 5, dadurch gekennzeichnet, daß der Abstand zwischen den Spalten (30, 32) wenigstens stellenweise kleiner als der Durchmesser der Querstrebe (20) ist.

8. Sitz nach einem der vorhergehenden Ansprüche, dadurch gekennzeichnet, daß die vorderen Teile (16A) der Flansche (16) derart gebogen sind, daß sie zum vorderen Bereich der Sitzfläche hin zusammenlaufen.
